(19)

**Europäisches Patentamt**

**European Patent Office**

**Office européen des brevets**

(11) **EP 4 089 446 A1**

(12) **EUROPEAN PATENT APPLICATION**

(43) Date of publication:
**16.11.2022 Bulletin 2022/46**

(21) Application number: **22152653.6**

(22) Date of filing: **21.01.2022**

(51) International Patent Classification (IPC):
***G01V 1/30*** *(2006.01)*

(52) Cooperative Patent Classification (CPC):
**G01V 1/306**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.03.2021 CN 202110230159**

(71) Applicant: **Beijing Petrosound Geo Services
Com.,Ltd
Beijing (CN)**

(72) Inventor: **Xue, Aimin
Beijing (CN)**

(74) Representative: **Herzog IP Patentanwalts GmbH
Steinstraße 16-18
40212 Düsseldorf (DE)**

(54) **A METHOD FOR SEISMIC FREQUENCY RESONANCE EXPLORATION TECHNOLOGY**

(57) The invention discloses a new method for seismic frequency resonance exploration technology (abbreviate: seismic FRT), which includes the following steps: Step 1, acquiring vibration wave data $o_{(y,t)}$ at the ground point y, and getting the data $o_{(y, f)}$ in the frequency domain by FFT transformation; Step 2, acquiring vibration wave data $O_{(x,t)}$ at a ground point x, which is a reference point located not far from the point y, and getting the data $O_{(x,f)}$ in the frequency domain by FFT transformation. And then calculating the excitation field source $In_{(x,f)}$; Step 3, calculating the impedance ratio $M_{(y, f)}$ in frequency domain at point y based on the excitation source field $In_{(x,f)}$ at point x; Step 4, converting the wave impedance ratio $M_{(y, f)}$ in frequency domain to $M_{(y, d)}$ in depth domain based on the relationship between the frequency $f$ and depth $d$, $d = V / (4 \cdot f)$, where V is medium speed; Step 5, As an option, converting the wave impedance ratio $M_{(y, d)}$ to the impedance and some other geological parameters such as density, Poisson's ratio and so on. This method is suitable for the attribute imaging of the underground medium with the elastic wave passive seismic data, but it does not rule out the effectiveness of the artificial excitation source.

| |
|---|
| setting a reference point x and an imaging point y in a measurement area, acquiring wave field O(x,t) and O(y,t). |
| transferm data O(x,t) and O(y,t) in time domain to data O(x,f) and O(y,f) in frequency domain . |
| at the ground reference point x, establish a functional relationship between frequency f and underground depth d |
| Converting the impedance ratio M(x, d) in depth domain to the impedance ratio M(x, f) in frequency domain |
| Computing the excitation source In(x, f) |
| Determining the excitation source field In(y, f) |
| calculating the wave impedance ratio M(y, f) |
| converting the frequency domain impedance ratio M(y, f) into the depth domain impedance ratio M(y, d) |
| Performing integration of impedance ratio M(y, d) to impedance Ω(y, d) and other geological parameters. |

Fig. 1

## Description

*Technical field*

The invention relates to the technical field of seismic exploration, in particular to an seismic frequency resonance exploration technology method (Abbreviation: Seismic FRT).

*Background Technology*

Conventional seismic exploration methods use seismic wave travel time and velocity to measure the spatial structure and attribute characteristics of geological bodies, and it depend on the artificial excitation sources. It has been developed for nearly a hundred years and is widely used in the field of geosciences. Nevertheless, it has many shortcomings in its application. Firstly, it requires artificial seismic sources; secondly, it has an exploration blind area in shallow part and limitations in some exploration areas. Artificial seismic sources are difficult to use in urban and environmentally sensitive areas. Its application is limited to shallow target, high-angle formation, igneous metamorphic rock, rocks without obvious interfaces, karst and complex geological structures.

To overcome the above-mentioned technical deficiencies of conventional seismic exploration methods, China's invention application CN110954943A, "Passive Source Seismic Frequency Resonance Exploration Method" proposed new solution. However, in the course of applying this technology, we also found that there are still some theoretical and technical defects that need to be supplemented and improved. First, the invention application CN110954943A has not considered the influence of the virtual excitation source on the exploration results; secondly, it has not made the necessary technical corrections to the measured data and the wave impedance ratio; finally, it still needs to do more when the wave impedance ratio data converting to the wave impedance and other geological parameters. To make up for the above-mentioned defects, especially to complete the theories of the influence of excitation source field, it is very necessary for a kind of seismic exploration technology.

Therefore, the present invention not only supplements the technique defects in the "passive source seismic frequency resonance method", but also perfects the theoretical problems, which making the technology more perfect and practical.

*Content*

In order to solve the shortcomings of the existing technology, the present invention proposes a seismic frequency resonance exploration method (abbreviation: seismic FRT), which can image the earth based on the principle of resonance occurring when elastic seismic waves travel through the earth. In principle, this method does not consider the spatial configuration between the seismic source and the receiver, and can image only by the passive noise received from the surface of the earth.

In order to achieve the above objectives, the technical solutions adopted by the present invention include:

An seismic frequency resonance exploration method (abbreviation: seismic FRT), which is characterized in that it includes setting a ground reference point x and an arbitrary acquisition point y in a measurement area, and performing the following steps:

Step S1, acquire the wave field $O_{(y,t)}$ at the ground point y and transfer it to $O_{(y,f)}$ in frequency domain, by FFT transformation;

Step S2, acquire wave data $O_{(x,t)}$ at point x as a reference located not far from the point *y*. Get the data $O_{(x,f)}$ in the frequency domain by FFT transformation, and then calculating the virtual excitation field source $In_{(x,f)}$;

Step S3, Calculate the virtual excitation source field $In_{(y,f)}$ at point *y* by calculating of virtual excitation source field $In_{(x,f)}$ at reference point *x*, and then calculating the impedance ratio $M_{(y,f)}$ in frequency domain.

Step S4, convert the wave impedance ratio $M_{(y,f)}$ in frequency domain to $M_{(y,d)}$ in depth domain based on the relationship between the medium speed *V*, frequency *f* and thickness *d*, $d = V / (4 \cdot f)$, in case of frequency resonance.

Step S5, Under the control of some known near-surface geological information, the wave impedance value $\Omega_{(d)}$, and other parameters such as density, Poisson's ratio and some geological parameters are calculated.

Preferably, according to the step S2, the virtual excitation source field $In_{(x, f)}$ at the ground reference point x can be calculated based on the formula $In_{(x, f)} = O_{(x, f)} / M_{(x,f)}$, where $M_{(x,f)}$ is wave impedance ratio data at point x as a known parameter and $O_{(x, f)}$ is acquiring data at the reference point x. $O_{(x, f)}$ needs to be computed based on the formula $d = V / (4 \cdot f)$, where *d* is the depth, *f* is frequency and *V* is the average velocity.

Preferably, according to the steps S2 to S3, the ground reference points $x_i$ in the measurement area can be set according to actual detection objects, where *i* is 1, 2...n, so as to calculate the virtual excitation source $In_{(xi, f)}$ at the reference point $x_i$. The mathematical method such as extension, interpolation or translation is used to obtain the virtual excitation source field $In_{(y,f)}$ at the acquisition point y with $In_{(xi, f)}$.

Preferably, according to step S3, the apparent

impedance ratio $M'_{(y,f)}$ is computed based on the formula $M'_{(y,f)} = O_{(y,f)} / In_{(y,f)}$, where $O_{(y,f)}$ is the acquired data in frequency domain at $y$ position and $In_{(y,f)}$ is the virtual excitation source data. Further, the impedance ratio $M_{(y,f)}$ is processed by the normalization based on the formula,

$$M_{(y,f)} = M'_{(y,f)} / Max\{M'_{(y,f)}\},$$

where $Max\{M'_{(y,f)}\}$ is maximum of apparent impedance ration $M'_{(y,f)}$.

Preferably, according to step S4, the impedance ration $M_{(y,\,d)}$ in depth domain is calculated from the impedance ratio $M_{(y,\,f)}$ in frequency domain based on the formula $d = V / (4 \cdot f)$, where $f$ is frequency, $d$ is depth and $V$ is the average velocity.

Preferably, in the step S5, when the wave impedance is calculated by integration, it should be performed under the control of the partial known wave impedance. It is also suitable for the calculation of other geological parameters. Note that the step S5 is performed in accordance with the exploration requirements and it is not always necessary.

Preferably, before the step S1, the following preprocessing steps to do equipment consistent are also included:

Step A1, acquire the vibration signal $E_{(i,t)}$ at the same time on a flat place, where $i=1,2,...N$. The record time length $T$ is in accordance with the formula, $T \geq 1500 \cdot H / V$, where $H$ is maximum of depth and $V$ is average velocity.
Step A2, the time domain signal data $E_{(i,t)}$ is converted into frequency domain data $E_{(i,f)}$;
Step A3: perform stack processing for the data $E_{(i,f)}$,

$$E_{(f)} = \frac{1}{N} \sum_{i=1}^{N} E_{(i,f)}$$

, where N is the number of devices. The average value $E_{(f)}$ for the signal at each frequency of the device is obtained. Further, the correction coefficient $\delta_{(i,f)}$ for each device in the frequency domain is obtained based on formula $\delta_{(i,f)} = E_{(i,f)} / E_{(f)}$.

Preferably, according to step S1 and S2, the consistent correction of every equipment within the service for data $O_{(y,\,f)}$ and $O_{(x,\,f)}$ is required, and the correction method is as following

$$O_{(y,\,f)} = O^i_{(y,\,f)} / \delta_{(i,f)},$$

$$O_{(x,\,f)} = O^j_{(x,\,f)} / \delta_{(j,f)},$$

where $O^i_{(y,f)}$, $O^j_{(x,f)}$ are the uncorrected data acquired at $y$ and $x$ position by equipment $i$ and $j$.

Preferably, according to step S1 and S2, the time domain amplitude data $O(x, t)$ and $O(y, t)$ are single-component or multi-component data obtained in one or multiple times. The acquisition time length $T$ and the sampling time interval $\Delta T$ are determined by the maximum of target depth $D$. They follow the empirical formula:

$T \geq 1500 \cdot D/V$, where $V$ is the average velocity;
$\Delta T < 4 \cdot \Delta D/V$, where $\Delta D$ is the minimum of depth resolution.

Preferably, according to step S1 and S2, the time domain amplitude data $O(x, t)$ and $O(y, t)$ also need to preprocessing, which includes and outlier attenuation. For the amplitude time-varying correction processing, it needs a reference fixed station to receive long time seismic vibration signals. The signal variation with time is used to correct the acquiring data time variant.

Preferably, according to step S4, the wave impedance ratio $M_{(y,\,d)}$ also needs to undergo the processing of surface elevation correction, surface static correction, and standard well parameter correction in the depth domain.

Preferably, according to step S1 to S5, the wave field includes pressure waves, shear waves, and surface waves. For the conventional exploration purposes, the energy and parameters of surface wave and shear wave are used for imaging to obtain the shear wave impedance ratio or impedance. Generally, the apparent surface wave impedance approximately equal to shear wave impedance. If the energy of first arrival wave is used (such as real-time fracturing monitoring), compression wave energy and its parameters are used for imaging, and the pressure wave impedance ratio is obtained as usually.

Compared with conventional seismic exploration, there are following beneficial effects with the present invention method: 1) the exploration cost and the environmental pollution is reduced due to the unnecessary artificial explosion excitation source.; 2) as seismic "noise" is used on the earth's surface, the application scope of seismic exploration is expanded to urban and structural complex areas; 3) as "frequency resonance" occurring in the stratum not the interface, so that it is possible to image geological bodies with high angles, no clear interfaces, and rough surfaces; 4) The present invention makes up for some deficiencies in imaging with time propagation characteristics, it is almost no shallow blind area; 5) The present invention images geological attribute parameters, which can directly provide explanations for lithology identification, the relationship between structure and lithology, and provide foundation for further demonstration of mechanical parameters and density parameters.

Compared with the invention application CN110954943A, the present invention describes that the ground reference point x and the arbitrary acquisition point *y* are set in the measurement area and the virtual excitation source field $In_{(x, f)}$ is calculated at *x*; The virtual excitation source field $In_{(y, f)}$ at the ground point *y* is determined according to the virtual excitation source field $In_{(x, f)}$; The impedance ratio data $M_{(y, f)}$ at point *y* is determined by the virtual excitation source $In_{(y, f)}$. This technical scheme completes the theoretical exploration scheme of the invention application CN110954943A and the geological exploration steps in the full frequency range (from the ground to any depth of the earth). In the invention, the procedure using a fixed reference station to get long time recording signal for time variant correction is another key processing technique to avoid the false imaging.

**Drawings**

Fig. 1 is a schematic flowchart of seismic FRT provided by the present invention.

Fig. 2 a comparison diagram of the exploration results imaged by seismic FRT (in the right) and China's invention application CN110954943A "passive source seismic frequency resonance exploration method"(in the left).

Fig. 3, a comparison diagram of the exploration results imaged by seismic FRT of the invention (in the left) and the " Conventional reflection seismic exploration technology " (in the right).

Fig. 4, an exploration result of a karst area imaged by seismic FRT provided by the present invention.

*Specific embodiment*

In order to understand the content of the present invention more professionally, it will be described in detail with reference to the accompanying drawings and example.

The purpose of the present invention is to provide a seismic method characterized that no artificial excitation sources. This method uses the principle of frequency resonance in the propagation of elastic seismic waves to image the properties of the earth. In principle, it does not measure the travel time between seismic source and the receiver, but measure frequency and microwave noise energy received from the ground surface to image the earth.

The basic principle of the present invention is as follows.

The elastic wave propagation satisfies the wave equation. In the case of a layered medium, the wave equation is

$$v_{(\omega)}^2 \frac{\partial^2 u}{\partial^2 z} = \frac{\partial^2 u}{\partial^2 t}. \qquad (1)$$

Where v is the velocity, u is the wave field, z is the vertical coordinate and t is the time. Assume there is only a single-layer medium above the uniform ground, the input wave field amplitude at the bottom of the medium is unit 1, and the frequency component of the wave field is consistent with the natural frequency of the single-layer medium, the wave amplitude function of the solution can be expressed as

$$Amp_{(\omega)} = \frac{\rho_1 v_1}{\rho_2 v_2}. \qquad (2)$$

where, $\omega$ is the angular frequency, p is the density, v is the velocity, and the product of p .v is the wave impedance; the corner index 1 is the upper layer medium label, and the 2 is the lower half-space label. The formula (2) shows that the amplitude solution of the wave field on the ground is the wave impedance ratio.

If the exploration depth range is assumed to be a single-layer medium with a thickness of *H*, and its velocity is set to the average speed *v* of the formation, the wave vibration of frequency $\omega$ received on the ground is related to the wave resonance goes through the formation with thickness *H*. The result of formula (2) is the transfer function of seismic wave through the stratum. Its value is the magnification of the field amplitude.

In the exploration, the sensor is used to acquire the vibration from a certain point on the ground. If the amplitude of a certain frequency is reasonably selected, the wave impedance ratio data of a corresponding location in the ground can be obtained by removing the influence of the excitation source field.

**Implementation process steps**

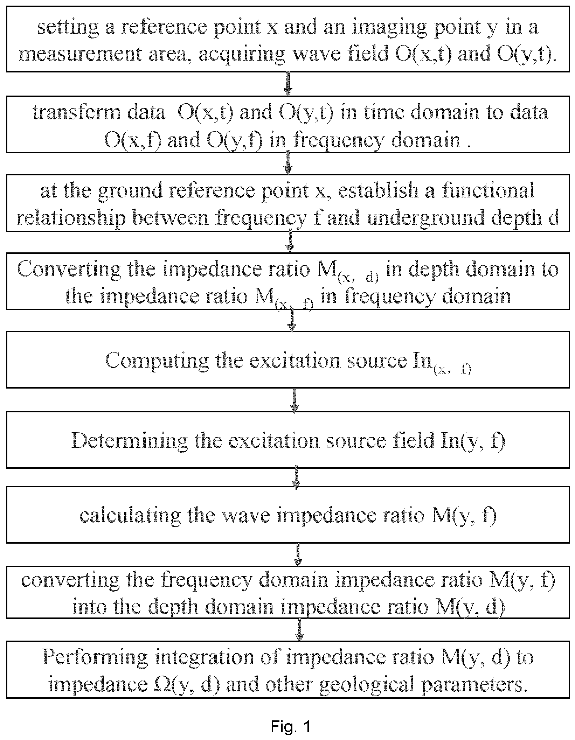

Figure 1 shows a schematic flow chart of seismic FRT provided by the present invention. The method includes setting a ground reference point x and an arbitrary acquisition point y in a measurement area, and perform the following steps:
Step A1, acquiring the time-domain wave amplitude data $Amp_{(x, t)}$ and $Amp_{(y, t)}$ at the ground reference point *x* and the imaging point *y*;

The time domain amplitude data $Amp_{(x, t)}$ and $Amp_{(y, t)}$ are single-component or multi-component data acquired in one or multi-times. There is no requirement for the acquisition to be at the same time. The record time length $T$ and the sampling interval $\Delta T$ are suggested to follow the following empirical rules:

$$T \geq 1500 \cdot D/V ,$$

Where $D$ is the maximum of depth, $V$ is the average velocity ;

$$\Delta T = 4 \cdot \Delta D/V ,$$

Where $\Delta D$ is the minimum of the resolution.

Preferably, the collected time-domain amplitude data $Amp_{(x, t)}$ and $Amp_{(y, t)}$ are respectively preprocessed, and the preprocessing includes the processing such as amplitude time-varying correction processing and outlier attenuation;

Preferably, the minimum frequency of the vibration signal sensor should be less than $F_{min}$, $F_{min} = V / (4 \cdot D_{max})$, and the maximum frequency should be greater than $F_{max}$, $F_{max} = V / (4 \cdot D_{min})$, where $D_{min}$ and $D_{max}$ is the minimum and the maximum of the depth;

Step A2: Perform Fourier transform on the time domain data $Amp_{(x, t)}$ and $Amp_{(y, t)}$ respectively to obtain frequency domain amplitude spectrum data $Amp_{(x, f)}$ and $Amp_{(y, f)}$;

Preferably, perform data correction for the frequency domain amplitude spectrum $Amp_{(x, f)}$ and $Amp_{(y, f)}$. The correction includes the consistency correction of the device and the time-variant correction of the wave amplitude; The time variant correction needs to set a reference fixed station to get the long-time recording signal. The time correction is processed based on the time-variant of the data at the fixed station.

Step A3, at the ground reference point $x$, establish a relationship between frequency $f$ and underground depth $d$;

From the statistical perspective of long-term observation, the following principles are stipulated: 1) Most of the elastic wave energy collected in step A1 is the result of being "resonated" when it reaches the ground through the earth, that is, the main energy comes from "resonance"; 2) The wave path from the deep layer to the ground can be divided into many single-layer plate-like bodies with decreasing thickness; 3) The time-domain amplitude data $Amp_{(x, t)}$ and $Amp_{(y, t)}$ collected in step A1 are related to geological information and complied with the above principles. Therefore, the relationship between frequency $f$ and underground depth $d$ can be established:

$d=0.25 \cdot V/f$, where $V$ is the average velocity for the wave from depth $d$ up to ground;

Step A4, Converting the impedance ratio $M_{(x, d)}$ in depth domain at reference point $x$ to the impedance ratio $M_{(x, f)}$ in frequency domain based on above relationship and known data.

Step A5, Computing the virtual excitation source $In_{(x, f)}$ with formula $In_{(x, f)} = Amp_{(x, f)} / M_{(x, f)}$, where $Amp_{(x, f)}$ is acquired seismic data at $x$ point and $M_{(x, f)}$ is the computed impedance ratio.

Step A6: Determining the virtual excitation source field $In_{(y, f)}$ at the point $y$ according to the virtual excitation source field $In_{(x, f)}$;

If the measurement area is so small that it can be considered that the horizontal variation of the excitation source amplitude meets the condition of a uniform field, the value of the virtual excitation source $In_{(x, f)}$ can be made equal to the virtual excitation source field $In_{(y, f)}$. Otherwise, according to actual detection needs, multiple ground standard points $x_i$ in the set measurement area are designed, where $i$ is $1, 2...n$.

According to the above steps, the virtual excitation source field $In_{(xi, f)}$ at the ground standard point $x_i$ is calculated, and the virtual excitation source field $In_{(y, f)}$ at the acquisition point y is obtained with mathematical methods of extension and interpolation or translation ;

Step A7, calculating the wave impedance ratio $M_{(y, f)}$ of the earth in frequency domain at the acquisition point y based on the formula $M_{(y, f)} = Amp_{(y, f)} / In_{(y, f)}$;

If the exploration accuracy requirements are low and the measurement area is small, you can also directly set $In_{(y, f)} = 1$, which is equivalent to the working plan designed in the invention application CN110954943A。

Step A8, converting the frequency domain wave impedance ratio $M_{(y, f)}$ at the acquisition point y into the depth domain wave impedance ratio $M_{(y, d)}$ based on the relationship described in the step A3;

Preferably, the depth domain wave impedance ratio $M_{(y, d)}$ is subjected to surface elevation correction, surface static correction, and standard well parameter correction;

Preferably, the depth-domain wave $M_{(y, d)}$ is subjected to regularization processing;

If the data acquired in step A1 is single component data, the data $M_{(y, d)}$ in step A8 is the single component depth domain wave impedance ratio.

If the data acquired in step A1 is multi-component data, there are depth-domain wave impedance ratio data $M_{i (y, d)}$ of multiple components, where $i$ is the component number. There are many options for this. 1) The data of the three components can be separately formed into their respective depth-domain wave impedance ratio data $M_{i(y, d)}$, $i=1,2,3$; 2) The two horizontal components can be combined to obtain the horizontal component depth-domain wave impedance ratio data

$$M_{\parallel(y,d)} = \sum_{i=1}^{2} M_{i(y,d)} / 2 ,$$

and the vertical component can form the depth-domain wave impedance ratio data $M_{\perp(y, d)}$ alone; 3) Combine multiple components to obtain a combined depth-domain wave impedance ratio data

$$M_{(y,d)} = \sum_{i=1}^{3} M_{i(y,d)i} / 3 .$$

StepA9, Integration of impedance ratio $M_{(y\,d)}$ to obtain wave impedance $\Omega_{(y,\,d)}$ under the condition of the near-surface wave impedance and some known impedance values. With the support of other geological information, the density and other geological parameters can be further obtained.

The calculated wave impedance $\Omega_{(y,\,d)}$ of the earth and other geological parameter are the imaging result data. It can be output directly.

**exploit examples 1**

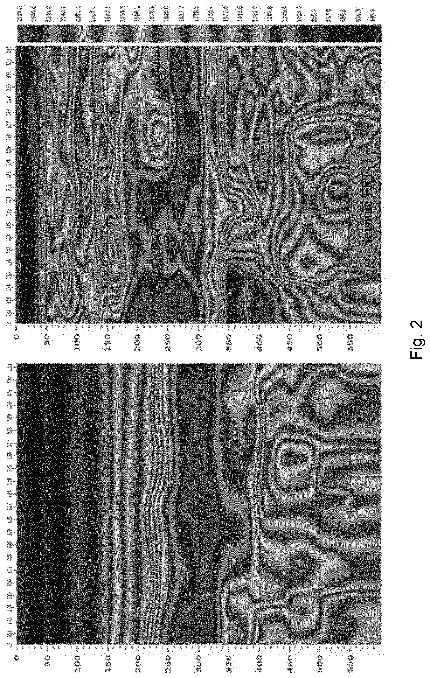

The comparison of the imaging ability is performed between the invented method, seismic FRT, and China's invention application CN110954943A "passive source seismic frequency resonance exploration method", in the same exploration section. The survey section is sandy mudstone structure at the shallow part above the depth 400 meters and with limestone geological structure below the depth 400 meters. There is coarse sandstone with thin mudstone between 125 meters and 260 meters; it is a set of stable fine sandstone between 40 meters and 125 meters. The Quaternary is in shallow less than 40 meters. Since the influence of the excitation source field has been eliminated and the various corrections described in the previous part have been performed, the imaging results of the method described in the implementation process steps of the present invention are shown on the right side of Figure 2. The geological information in detail is clear and abundant for the thin-layer rock features and karst features in limestone. In contrast, the imaging results of China's invention application CN110954943A "passive source seismic frequency resonance exploration method" are shown on the left side of Figure 2. We see that only a few large sets of rock formations have obtained and there is no detail expression for the thin layer, especially for the Quaternary and underlying fine sandstone structure, the internal structures of mudstone at 100 meters to 125 meters and of limestone below 400 meters. The method provided by the present invention improves greatly the images of the profile.

**exploit examples 2**

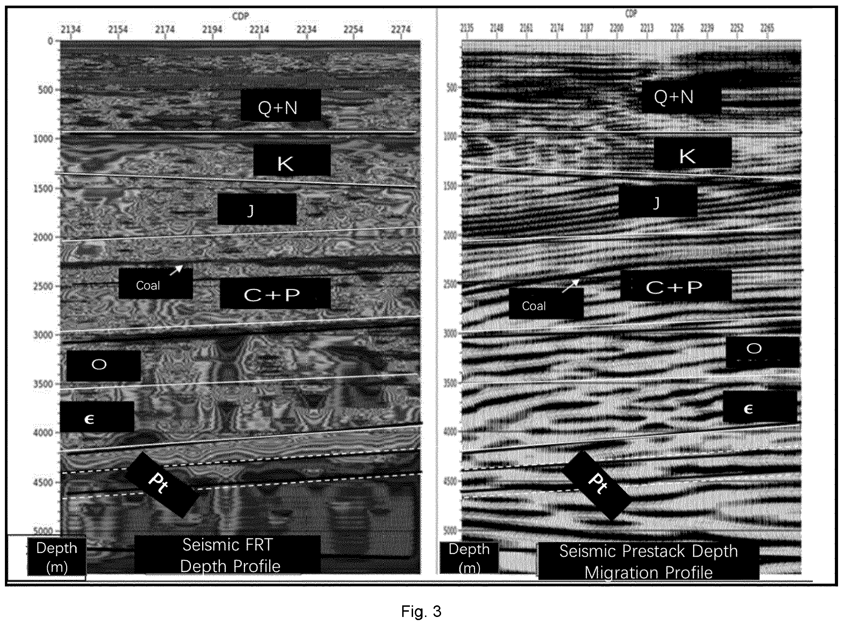

The imaging results in a profile at same locations are compared between the present invention method and the conventional seismic reflection method. The survey site is in the southern part of Beijing, and the maximum exploration depth is about 5,500 meters. The imaging result for conventional reflection seismic exploration is the pre-stack depth migration section, and for the seismic FRT exploration is the wave impedance ratio section. As shown in Figure 3, the right side is the imaging result of the conventional seismic reflection, and the left side is the imaging result of the seismic FRT provided by the present invention. Comparing the two results, it can be seen that the seismic FRT imaging has a higher resolution than the conventional reflection seismic prestack depth migration for the shallow Cenozoic sand and mudstone formations. For the imaging of the coal strata in the Upper Paleozoic, the fractures, karsts and small faults in the Lower Paleozoic, and the weathering crust on the top of the Ordovician, the present invention method seismic FRT has special advantages.

**exploit examples 3**

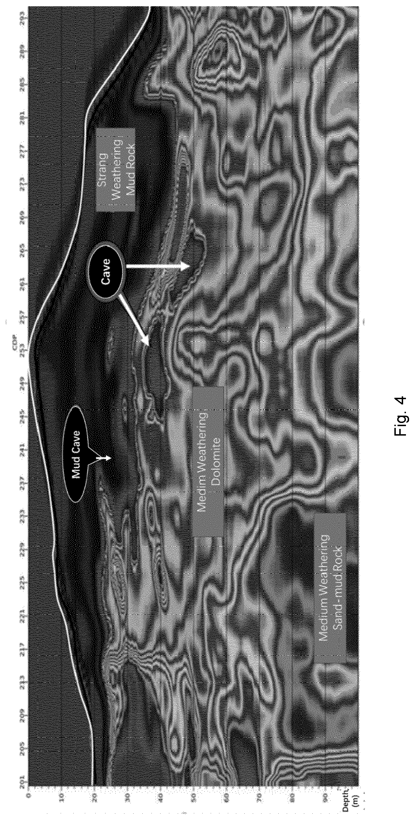

The present invention seismic FRT was used to conduct experiments in karst areas in Yunnan, China, and the results are shown in Figure 4. Parts of the profile are with medium weathered dolomite and a large amount of karst caves in it. Underneath is a medium weathered sandy mudstone formation. The imaging from the present invent seismic FRT reveals fine geological structure of the section and three large-scale karst caves. After drilling, one of them is a dolomite cave filled with mud, and two are large dolomite caves without filling. The existence of caves and lithological distribution features are characteristics by the present invention method -- seismic FRT and confirmed by drilling followed.

In summary, the " seismic FRT " provided by the present invention can image the geological structures and attributes from the passive seismic data acquired on the ground. It is different from the conventional seismic reflection method that relies on the travel time of the wave field. It uses the frequency-amplitude data of the signal to measure the underground medium. The invention solves the problem of detecting density--impedance changes. It is hard to know the density distributes for conventional geophysical exploration unless logging. Seismic FRT also solves the imaging problem of blind areas near the surface and the vertical faults in complex structure areas for conventional seismic reflection exploration. The invention provides a new frequency domain seismic exploration technology method. Its application fields may involve geo-engineering, hydrogeology exploration, geo-disaster assessment, road underground defect detection, mineral resources exploration, oil-gas exploration, environmental protection and urban geophysical exploration, etc.

The above are only the preferred specific embodiments of the present invention, but the protection scope of the present invention is not limited thereto. Any person skilled in the art can easily think of changes or substitutions within the technical scope disclosed by the present invention. All of them should be covered within the protection scope of the present invention. Therefore, the protection scope of the present invention should be subject to the protection scope of the claims.

**Claims**

1. An seismic frequency resonance exploration method (abbreviate: seismic FRT), **characterized in that** it includes setting ground reference points x and arbitrary acquisition points y in the measurement area, and performing the following steps:

Step S1, acquiring wave field $O_{(y, t)}$ at the ground point y and transfer it to be in the frequency domain, $O_{(y, f)}$, by FFT transformation;

Step S2, acquiring wave data $O_{(x, t)}$ at a ground point x as a reference point where located not far from the point y, and getting the data $O_{(x, f)}$ in the frequency domain by FFT transformation, and then calculating the excitation field source $In_{(x, f)}$;

Step S3, Get the excitation source field $In_{(y, f)}$ based on the excitation source field $In_{(x, f)}$ at the point y, and then get the impedance ratio $M_{(y, f)}$ in frequency domain.

Step S4, converting the wave impedance ratio data $M_{(y, f)}$ in frequency domain to $M_{(y, d)}$ in depth domain based on the relationship between the medium speed $V$, frequency f and thickness d, $d = V/ (4 \cdot f)$ in case of frequency resonance;

Step S5, selectively processing the wave impedance ratio $M_{(y, d)}$ to get some other geological parameters such as impedance $\Omega_{(d)}$, density $\rho$, Poisson's ratio 6 and so on with the known near-surface geological parameters.

2. Method according to claim 1, **characterized in that**, in the step S2, with the wave field is $O_{(x, f)}$ at the reference point x, the excitation source field $In_{(x, f)}$ at the ground reference point x can be calculated based on the formula $In_{(x, f)} = O_{(x, f)}/ M_{(x, f)}$, where $M_{(x, f)}$ is wave impedance ratio at point x which are known previously.

3. Method according to claim 1, wherein in the step S2, the wave impedance ratio data $M_{(x, f)}$ at the point x is converted from the depth domain impedance ratio $M_{(x, d)}$ based on the relationship between the frequency f and the depth d and average velocity $V$, $d = V / (4 \cdot f)$.

4. Method according to claim 1, **characterized in that**, in the step S2, according to actual exploration requirements, plurality of the ground reference points $x_i$ are designed in the measurement area, where $i$ is 1, 2,... n. The excitation source field $In_{(xi, f)}$ at the ground reference point $x_i$ is obtained by calculation;

5. Method according to claim 1, wherein in step S3, the mathematical method such as extension, interpolation or translation is used to obtain the excitation source field $In_{(y, f)}$ at the acquisition point y from $In_{(xi, f)}$.

6. Method according to claim 1, wherein in step S3, the apparent impedance ratio $M'_{(y,f)}$ is computed based on the formula $M'_{(y,f)} = O_{(y,f)} / In_{(y,f)}$, where $O_{(y, f)}$ is the acquired data in frequency domain at y position and $In_{(y,f)}$ is the excitation source data. Further, the impedance ratio $M_{(y,f)}$ is processed by the normalization based on the formula,

$$M_{(y,f)} = M'_{(y,f)} / Max\left\{ M'_{(y,f)} \right\},$$

where $Max\left\{ M'_{(y,f)} \right\}$ is maximum of apparent impedance ratio $M'_{(y,f)}$.

7. Method according to claim 1, wherein in step S4, the impedance ratio $M_{(y, d)}$ in depth domain is calculated from the impedance ratio $M_{(y, f)}$ in frequency domain based on the formula $d = V / (4 \cdot f)$, where $f$ is frequency, d is depth and $V$ is the average velocity.

8. Method according to claim 1, **characterized in that**, the step S5 is in accordance with the exploration requirements but not necessary in any case. It may be set, $In_{(y, f)}$ =1, as working in poor geological information areas.

9. Method according to any one of claims 1 to 8, wherein in step S1 and S2, it includes some extra prior process steps for getting equipment correction coefficients as follows.

Step A1, Acquiring the vibration signal $E_{(i,t)}$ at the same time $t$ in the measurement on a place, where $i=1,2,...N$, the record time length $T$ is in accordance with the formula, $T \geq 1500. H / V$, where $H$ is maximum of depth and $V$ is average velocity.

Step A2, converting time domain data $E_{(i,t)}$ to frequency domain data $E_{(i,f)}$.

Step A3, Obtaining the average of every frequency data $E_{(f)}$ by stacking $E_{(i,f)}$ from N equipment, as $E_{(f)} = \dfrac{1}{N} \sum\limits_{i=1}^{N} E_{(i, f)}$ and getting correction coefficient $\delta_{(i,f)}$ for every equipment within the service by doing the regularization as $\delta_{(i,f)} = E_{(i,f)} / E_{(f)}$.

10. Method according to claim 1, wherein in step S1 and S2, the consistent correction of every equipment within the service for data $O_{(y, f)}$ and $O_{(x, f)}$ is as following

$$O_{(y,f)} = O^i_{(y,f)} / \delta_{(i,f)},$$

$$O_{(x,f)} = O^j_{(x,f)} / \delta_{(j,f)} \text{, where } O^i_{(y,f)}, O^j_{(x,f)}$$

are the uncorrected data acquired at position $y$ and $x$ by equipment number $i$ and $j$.

11. Method according to claim 1, it also includes some other data corrections such as elevation correction, surface consistent correction for ground acquisition condition, standard well data correction and so on for the image improvement.

12. Method according to claim 2, the time variant correction for data $O_{(y, f)}$ is required. The procedure of the time variant correction needs a long time recorded vibration signal at a fixed reference station, the time correction interval is according to the variation intensity, the time correction interval between 500 second to 3600 second is generally suggested.

13. Method according to any one of claims 1 to 3, it states that the data acquisition on ground includes pressure wave, shear wave and surface wave. The different wave and their velocities are used for different exploration purposes.

setting a reference point x and an imaging point y in a measurement area, acquiring wave field O(x,t) and O(y,t).

↓

transferm data O(x,t) and O(y,t) in time domain to data O(x,f) and O(y,f) in frequency domain .

↓

at the ground reference point x, establish a functional relationship between frequency f and underground depth d

↓

Converting the impedance ratio $M_{(x, d)}$ in depth domain to the impedance ratio $M_{(x, f)}$ in frequency domain

↓

Computing the excitation source $In_{(x, f)}$

↓

Determining the excitation source field In(y, f)

↓

calculating the wave impedance ratio M(y, f)

↓

converting the frequency domain impedance ratio M(y, f) into the depth domain impedance ratio M(y, d)

↓

Performing integration of impedance ratio M(y, d) to impedance Ω(y, d) and other geological parameters.

Fig. 1

Fig. 2

Fig. 3

Fig. 4

EP 4 089 446 A1

Europäisches Patentamt
European Patent Office
Office européen des brevets

# EUROPEAN SEARCH REPORT

Application Number

EP 22 15 2653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 058 073 A (VERWEST BRUCE J [GB]) 2 May 2000 (2000-05-02) | 1-8, 10-13 | INV. G01V1/30 |
| A | * column 7, line 62 - column 8, line 16 * <br> * column 11, lines 53-63 * <br> * column 14, lines 17-29 * <br> * column 15, lines 18-23,37-45,50 * <br> * column 17, line 60 - column 18, line 8 * <br> ----- | 9 | |
| Y | CN 107 918 142 B (BEIJING PETROSOUND GEOSERVICES CORP) 19 July 2019 (2019-07-19) | 1-8, 10-13 | |
| A | * paragraphs [0018], [0019] * <br> ----- | 9 | |
| Y | EP 1 094 338 A1 (JASON GEOSYSTEMS B V [NL]) 25 April 2001 (2001-04-25) | 5 | |
| A | * paragraph [0040] * <br> ----- | 9 | |

TECHNICAL FIELDS
SEARCHED        (IPC)

G01V

The present search report has been drawn up for all claims

| Place of search | Date of completion of the search | Examiner |
|---|---|---|
| The Hague | 28 September 2022 | Mirkovic, Olinka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 22 15 2653

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2022

| Patent document cited in search report | | Publication date | Patent family member(s) | | Publication date |
|---|---|---|---|---|---|
| US 6058073 | A | 02-05-2000 | NONE | | |
| CN 107918142 | B | 19-07-2019 | NONE | | |
| EP 1094338 | A1 | 25-04-2001 | AT | 337566 T | 15-09-2006 |
| | | | AU | 1854101 A | 30-04-2001 |
| | | | DK | 1094338 T3 | 27-12-2006 |
| | | | DK | 1746443 T3 | 17-03-2014 |
| | | | EP | 1094338 A1 | 25-04-2001 |
| | | | EP | 1746443 A1 | 24-01-2007 |
| | | | EP | 2296013 A2 | 16-03-2011 |
| | | | US | 2002013661 A1 | 31-01-2002 |
| | | | US | 2004064294 A1 | 01-04-2004 |
| | | | WO | 0129577 A1 | 26-04-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110954943 A